# FASCICULE DE BREVET EUROPEEN

(11) **EP 1 194 077 B1**
(45) Date de publication et mention de la délivrance du brevet: **17.05.2006**
(21) Numéro de dépôt: 00951674.1
(22) Date de dépôt: 13.07.2000
(51) Int. Cl.: A61C 3/02

(54) **ENSEMBLE DE FRAISES DESTINE A LA PREPARATION D'UNE DENT EN VUE DE LA POSE D'UNE COURONNE PROTHETIQUE**
FRÄSANORDNUNG FÜR DIE VORBEREITUNG EINES ZAHNES ZUR KRONENBEFESTIGUNG
DRILL ASSEMBLY FOR PREPARING A PROSTHETIC CROWN-RECEIVING TOOTH

(30) Priorité: 13.07.1999 FR 9909207; 18.10.1999 FR 9913111
(43) Date de publication de la demande: 10.04.2002
(73) Titulaire: Logeart, Dominique, 08000 Charleville-Mezieres (FR)
(72) Inventeur: Logeart, Dominique, 08000 Charleville-Mezieres (FR)
(74) Mandataire: Rhein, Alain
(86) Numéro de dépôt international: PCT/FR2000/002031
(87) Numéro de publication internationale: WO 2001/003603

(56) Documents cités:
- DE-U- 8 811 689
- FR-A- 2 716 795
- GB-A- 379 200

## Description

La présente invention a pour objet un ensemble de fraises destiné à la préparation d'une dent en vue de la pose d'une couronne prothétique.

Préalablement à la pose sur une dent d'une couronne prothétique, il est nécessaire d'usiner ladite dent, en sorte d'enlever la matière qui va être remplacée par ladite couronne prothétique.

Les caractéristiques dimensionnelles de la couronne prothétique devant être de préférence identiques à celles de la dent initiale, on réalise un usinage des quatre faces et de la partie coronaire de ladite dent.

L'opération est particulièrement délicate puisqu'il est indispensable d'épargner la papille et la gencive, et d'éviter d'endommager les dents adjacentes qui sont souvent très proches de la dent à traiter, sachant que le praticien ne dispose pas de point d'appui.

Par ailleurs, afin d'obtenir un parfait ajustement de la couronne prothétique, il convient que les faces soit usinées de manière homothétique en respectant les plans, sachant que pour une incisive la face vestibulaire est convexe et que la face linguale est concave, que pour les prémolaires et les molaires les quatre faces sont convexes, et qu'en outre, les faces convexes le sont à la fois dans le sens cervico-occlusal et dans le sens mésio-distal.

Actuellement, pour atteindre ce but, la préparation d'une dent débute par la réalisation d'une gorge mésio-distale, puis on usine la partie occlusale puis la partie cervicale en utilisant le fond de ladite gorge comme repère de profondeur, tandis que la dernière opération consiste à réaliser un épaulement au niveau du collet dont le congé est de préférence à angle droit en regard de la papille gingivale.

Les fraises permettant de réaliser ces opérations sont par exemple du type de celles décrites dans les documents FR 2.481.105 et DE 2.012.268. De manière connue, ces fraises comportent une ou plusieurs parties actives et une ou plusieurs parties inactives, permettant au praticien de prendre un appui sans endommager la zone d'appui.

Toutefois, les fraises de ce type ne permettent pas au praticien de préparer une dent en toute sérénité, étant donné les contraintes à respecter.

En effet, si les parties actives de ces fraises permettent de prendre un appui pour réaliser l'usinage, elles ne permettent pas de contrôler la profondeur de l'usinage, notamment lors de la réalisation du congé cervical.

On connaît ainsi par le document GB 379.200 des fraises dites de « BATT » destinées à un usage intra-coronarien et permettant plus particulièrement l'ablation du plafond pulpaire de façon à traiter au mieux l'éviction pulpaire. Ces fraises peuvent être de forme ovoïde ou allongée, et comportent chacune deux parties, une partie proximale active et une extrémité distale inactive. La fraise est cylindrique, cylindro-conique ou ovoïde, et son extrémité distale est hémisphérique pour les fraises cylindriques et cylindro-coniques, et parabolique pour les fraises ovoïdes, la partie inactive couvrant au moins la zone hémisphérique pour les fraises cylindriques et cylindro-coniques, et une zone parabolique d'une hauteur sensiblement égale ou supérieure au rayon de courbure de la partie extrême pour les fraises ovoïdes.

Du fait de ces caractéristiques, notamment l'inactivité de la partie distale, ces fraises ne permettent de réaliser que l'alésage d'une cavité par un mouvement de pivotement et de glissement autour d'un point de la partie inactive. Du fait de sa relativement grande surface, notamment par rapport à son rayon de courbure, la partie inactive n'est adaptée qu'à l'usinage d'un plafond pulpaire, et ne pourrait en aucun cas permettre d'usiner la partie coronaire d'une dent.

On connaît également, par le document FR 2.716.795, des fraises dentaires comportant au moins une partie inactive et partie active, et qui sont destinées à la préparation d'une dent en vue de la pose d'une couronne prothétique. Ces fraises, qui doivent permettrent d'usiner la dent simultanément sur toute sa hauteur, ne permettent pas un travail précis et surtout un contrôle de la profondeur d'usinage, notamment lorsque ces fraises présentent une extrémité distale active plate.

La présente invention a pour but de proposer un ensemble de fraises destiné à la préparation d'une dent en vue de la pose d'une couronne prothétique, permettant de remédier aux divers inconvénients précités.

L'ensemble de fraises destiné à la préparation d'une dent en vue de la pose d'une couronne prothétique, où lesdites fraises comportent une partie active et au moins une partie inactive, caractérisé en ce que chacune des fraises comporte ladite partie active en extrémité distale, ayant une forme de portion de sphère, et qui présente une partie inactive et une partie active, dont l'une desdites parties active ou inactive consiste en une calotte sphérique en position apicale présentant un petit cercle de rayon très inférieur au rayon de courbure de ladite calotte.

Conformément à l'invention, la calotte sphérique apicale est inactive.

Selon un mode de réalisation particulier de l'ensemble de fraise selon l'invention, l'une des fraises comporte une tête en forme de sphère ou analogue.

Selon un autre mode de réalisation particulier de l'ensemble de fraises selon l'invention, l'une des fraises est en forme cylindre dont la surface cylindrique est inactive, et dont l'extrémité distale est en forme de calotte sphérique de rayon de courbure supérieur à celui dudit cylindre.

Selon un autre mode de réalisation particulier de l'ensemble de fraises selon l'invention, l'une desdites fraises est en forme de cylindre, sa surface cylindrique étant inactive, tandis que son extrémité distale, qui est en forme de calotte sphérique de rayon de courbure supérieur à celui dudit cylindre, présente, outre une calotte apicale inactive, une zone périphérique inactive en sorte que la partie active de ladite extrémité distale s'étende sur un anneau sphérique.

Selon un autre mode de réalisation particulier de l'ensemble de fraises selon l'invention, l'une des fraises est de forme cylindrique ou cylindro-conique, dont la surface cylindrique ou cylindro-conique est active, tandis que l'extrémité distale est hémisphérique.

Conformément à l'invention, la calotte sphérique apicale est active.

Selon un mode de réalisation particulier de l'ensemble de fraises selon l'invention, l'une desdites fraises est en forme de cylindre, sa surface cylindrique étant inactive, tandis que son extrémité distale, qui est en forme de calotte sphérique de rayon de courbure supérieur à celui dudit cylindre, présente une calotte sphérique apicale active bordée par un anneau sphérique inactif.

Selon un autre mode de réalisation particulier de l'ensemble de fraises selon l'invention, l'une desdites fraises est en forme de cylindre, sa surface cylindrique étant inactive, tandis que son extrémité distale, qui est en forme de calotte sphérique de rayon de courbure supérieur à celui dudit cylindre, présente une calotte sphérique apicale active bordée par un bord chanfreiné inactif.

Les avantages et les caractéristiques de l'ensemble de fraises selon l'invention, ressortiront plus clairement de la description qui suit et qui se rapporte au dessin annexé, lequel en représente un mode de réalisation non limitatif.

Dans le dessin annexé :
- la figure la représente une vue partielle en élévation de l'une des fraises de l'ensemble de fraises selon l'invention.
- la figure 1b représente une vue en plan de l'extrémité de la même fraise.
- les figures 2a et 2b représentent des vues partielles en élévation de fraises de type connu, qui peuvent être utilisées conjointement à l'ensemble de fraises selon l'invention.
- la figure 3a représente une vue partielle en élévation d'une autre fraise de l'ensemble de fraises selon l'invention.
- la figure 3b représente une vue en plan de l'extrémité de la même fraise.
- la figure 4a représente une vue partielle en élévation d'une autre fraise de l'ensemble de fraises selon l'invention.
- la figure 4b représente une vue en plan de l'extrémité de la même fraise.
- la figure 5a représente une vue partielle en élévation d'une autre fraise de l'ensemble de fraises selon l'invention.
- la figure 5b représente une vue en plan de l'extrémité de la même fraise.
- la figure 6a représente une vue partielle en élévation d'une autre fraise de l'ensemble de fraises selon l'invention.
- la figure 6b représente une vue en plan de l'extrémité de la même fraise.
- la figure 7a représente une vue partielle en élévation d'une autre fraise de l'ensemble de fraises selon l'invention.
- la figure 7b représente une vue en plan de l'extrémité de la même fraise.
- les figures 8a et 8b représentent des vues schématiques en coupe vestibulo-linguale d'une incisive lors d'usinages de celle-ci au moyen d'une fraise de l'ensemble de fraises selon l'invention.
- les figures 9a, 9b, 9c, 9d, 9e, 9f, 9g, 9h et 9i représentent des vues en coupe vestibulo-linguale d'une incisive lors d'étapes successives de sa préparation au moyen de l'ensemble de fraises selon l'invention.
- les figures 10a, 10b, 10c, 10d, 10e, 10f et 10g représentent des vues de face de la même incisive lors de certaines des mêmes étapes successives de la même préparation.

En référence à la figure 1a, on peut voir une fraise 1 faisant partie de l'ensemble de fraises selon l'invention pour la préparation d'une dent en vue de la pose d'une couronne prothétique.

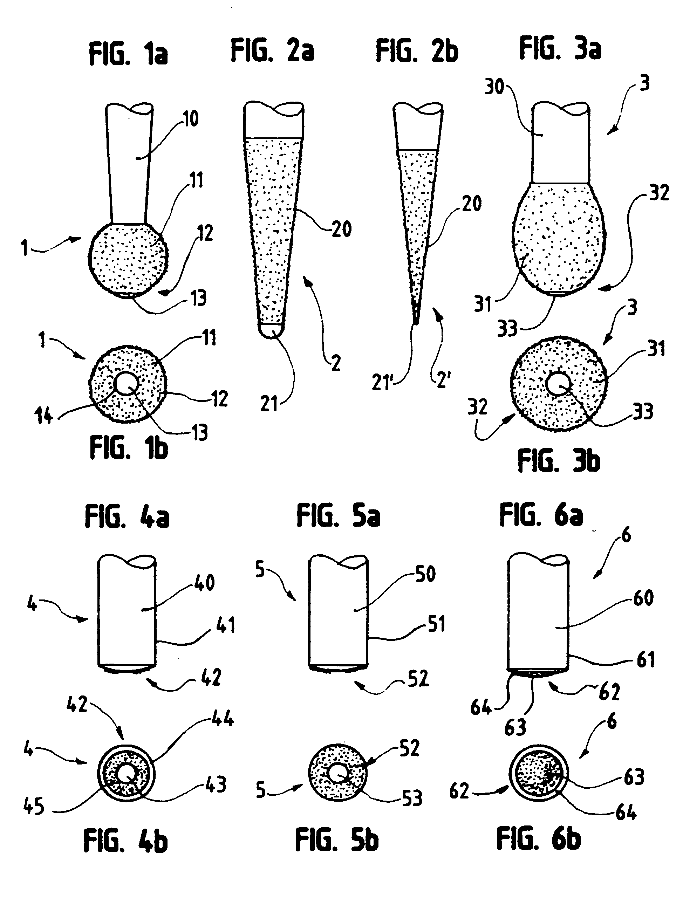

La fraise 1 comporte un fût lisse 10 qui porte à son extrémité une sphère 11 dont la surface est active, à l'exception de l'extrémité apicale de la partie distale 12 qui consiste en une petite calotte sphérique 13 non active, comme cela est représenté sur la figure 1b.

La calotte sphérique 13 est délimitée par un petit cercle 14 d'un rayon bien inférieur à celui de courbure de ladite calotte sphérique, en l'occurrence celui de la sphère 11. A titre d'exemple, pour la fraise 1, le rayon du petit cercle 14 représente un tiers du rayon de courbure de la sphère 11.

L'extrémité distale 12 comporte ainsi non seulement une partie apicale inactive, mais également une partie active se présentant sous la forme d'un anneau sphérique.

En référence aux figures 2a et 2b, on peut voir des fraises 2 et 2' de type connu, fréquemment utilisées pour la préparation d'une dent, la fraise 2 est notamment dite fraise de « BATT ». La fraise 2 représentée sur la figure 2a présente une surface conique 20 active et une extrémité hémisphérique arrondie 21 inactive, tandis que la fraise 2', représentée sur la figure 2b, présente une surface conique 20' active et une extrémité pointue 21' inactive, les fraises 2 et 2' peuvent être utilisées en association avec l'ensemble de fraises selon l'invention, comme cela sera vu plus loin.

En référence à la figure 3a, on peut voir une fraise 3 qui comporte un fût lisse 30 portant à son extrémité une boule ovalisée 31 dont la surface est active tout comme son extrémité distale hémisphérique 32 à l'exception de son extrémité apicale qui consiste en une petite calotte sphérique 33 non active, comme cela est représenté sur la figure 3b.

En référence à la figure 4a, on peut voir une fraise 4 qui consiste en un cylindre 40 dont la surface cylindrique 41 est inactive, et dont l'extrémité distale 42 est en forme de portion de sphère d'un rayon de courbure très supérieur à celui du cylindre 40 en sorte qu'elle consiste en une calotte sphérique, et qui présente une extrémité apicale 43 en forme de calotte sphérique et une zone périphérique 44 inactives, qui bordent une zone hémisphérique active 45, comme cela est visible sur la figure 4b.

En référence à la figure 5a, on peut voir une fraise 5 qui consiste en un cylindre 50 dont la surface cylindrique 51 est inactive, et dont l'extrémité distale 52, en forme de portion de sphère d'un rayon de courbure supérieur à celui du cylindre 50 en sorte qu'elle consiste en une calotte sphérique, est active à l'exception de l'extrémité apicale 53 qui consiste en une calotte sphérique inactive, comme cela est visible sur la figure 5b.

En référence maintenant aux figures 6a et 6b, on peut voir une fraise 6 qui consiste en un cylindre 60 dont la surface cylindrique 61 est inactive, et dont l'extrémité distale 62, en forme de portion de sphère d'un rayon de courbure très supérieur à celui du cylindre 60, en sorte qu'elle consiste en une calotte sphérique, présente une partie apicale 63 active en forme de calotte sphérique bordée périphériquement par une zone 64 inactive en forme d'anneau sphérique.

On notera que selon une variante, non représentée, la zone 64 inactive peut être constituée par un bord chanfreiné.

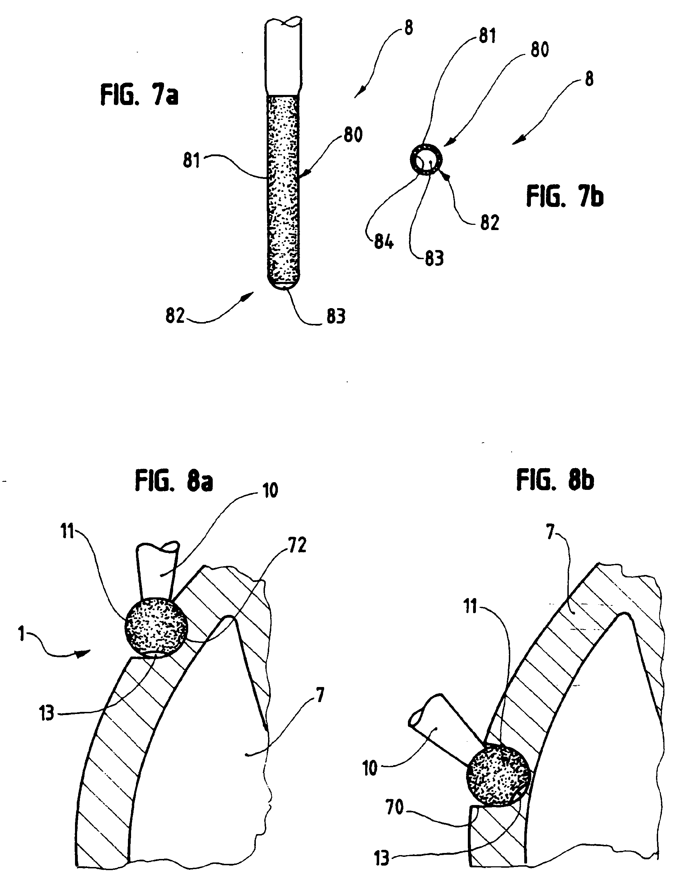

En référence maintenant à la figure 7, on peut voir une fraise 8 qui consiste en un cylindre 80 présentant une surface cylindrique 81 active, ainsi qu'une extrémité distale 82 de forme hémisphérique active à l'exception de la partie apicale 83 qui est inactive et qui se présente sous la forme d'une calotte dont le petit cercle 84 est bien inférieur à celui de la partie distale hémisphérique 82.

Selon une variante non représentée de la fraise 8, le cylindre 80 peut être remplacé par un corps cylindro-conique.

En référence maintenant aux figures 8a et 8b, on peut voir le mode d'utilisation d'une fraise de l'ensemble de fraises selon l'invention, en l'occurrence une fraise 1 de forme sphérique, sur une incisive 7, la zone hachurée de celle-ci correspondant à l'épaisseur de matière à enlever.

Sur la figure 8a, on peut voir que la fraise 1 est approchée latéralement de l'incisive 7 et parallèlement à l'axe de celle-ci. La pénétration de la sphère 11 dans la matière n'est pas possible axialement du fait de la calotte inactive 13, elle est limitée en profondeur par le fût lisse 10 qui vient en butée contre le bord supérieur de la cavité réalisée.

En référence maintenant à la figure 8b, on peut voir qu'en inclinant la fraise 1 par rapport à l'axe de l'incisive 7, on peut accroître la profondeur de la cavité réalisée, laquelle profondeur est alors limitée par la calotte 13. A partir de la position représentée, la sphère ne 11 peut être déplacée que dans un mouvement mésio-distal, tout en conservant une profondeur constante, sans risque de perforation. Le choix du diamètre de la sphère 11 détermine la profondeur de la cavité ou du sillon à réaliser.

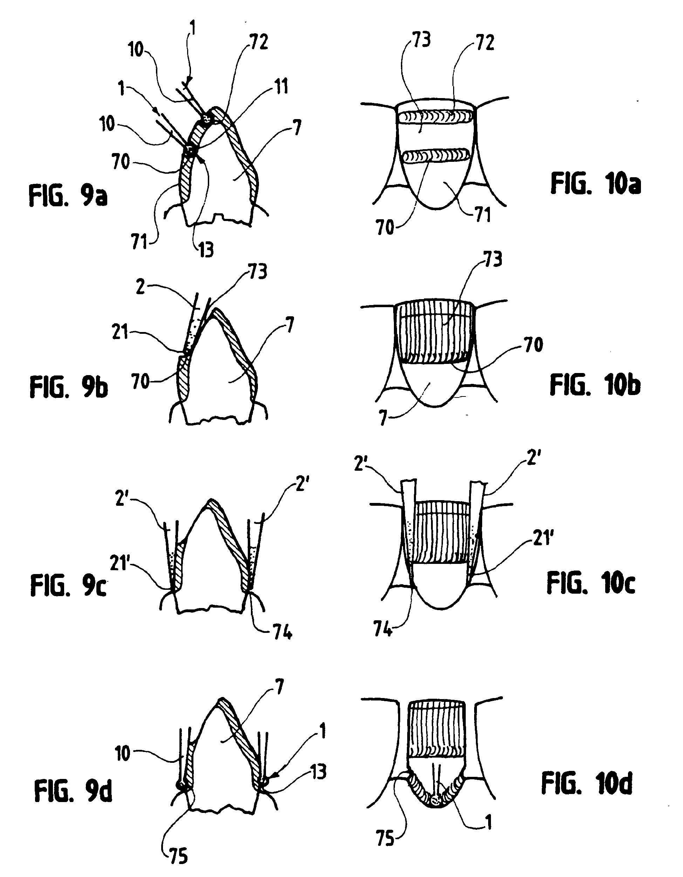

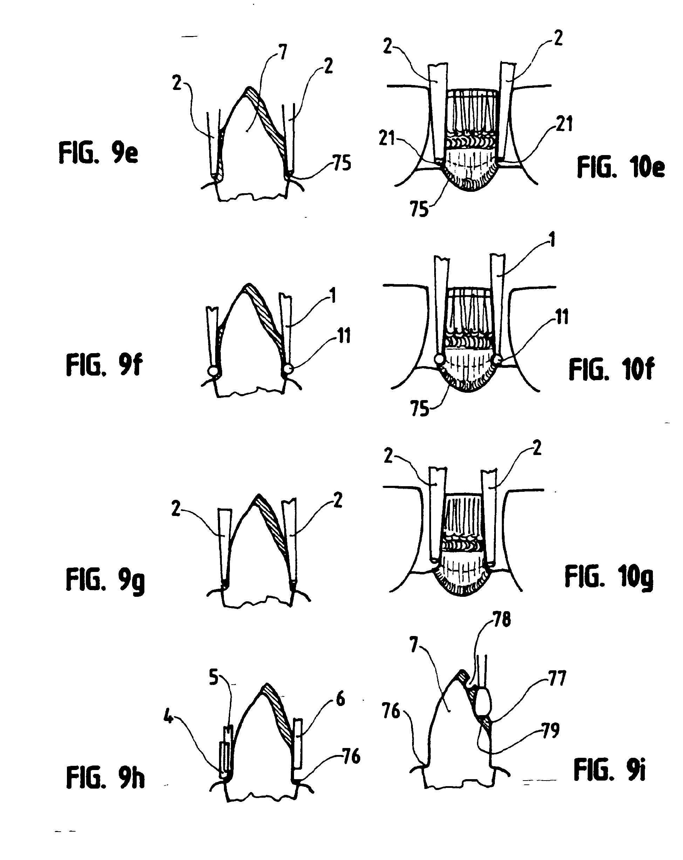

Le mode d'utilisation des fraises 1, 2, 2', 3, 4, 5, 6 et 8 va maintenant être décrit à l'appui des figures 9a, 9b, 9c, 9d, 9e, 9f, 9g, 9h et 9i et des figures 10a, 10b, 10c, 10d, 10e, 10f et 10g, lesquelles représentent différentes étapes de la préparation d'une incisive 7.

En référence aux figures 9a et 10a, on peut voir que la première étape de la préparation consiste à réaliser dans un premier temps un sillon mésio-distal 70 à mi-hauteur de la face convexe vestibulaire 71 au moyen d'une fraise 1, représentée uniquement sur la figure 1a, d'épaisseur souhaitée en respectant les dents adjacentes c'est à dire en choisissant une fraise 1 de diamètre adéquat. Comme cela a été vu précédemment, le sillon 70 est creusé en prenant appui sur le fût 10 et en l'inclinant pour obtenir une pénétration suffisante, ce qui est possible sur la face vestibulaire 71.

La fraise 1 ne peut travailler que dans un mouvement de balance dans des positions verrouillées sur le fût et sur l'extrémité inactive 13, laquelle limite la pénétration de la fraise 1.

L'étape suivante consiste à réaliser dans la face vestibulaire 71 un sillon mésio-distal 72 au niveau occlusal à proximité du bord incisif, à environ 2 millimètres, également au moyen de la fraise 1 utilisée de la même manière que pour la réalisation du sillon 70.

L'étape suivante, non représentée, consiste à marquer le fond du sillon 72 en y appliquant une matière colorante, le fond du sillon 72 servant de repère de profondeur.

En référence maintenant aux figures 9b et 10b, on peut voir que l'étape suivante consiste à effacer le plus homothétiquement possible la face vestibulo-occlusale 73 au moyen d'une fraise 2 en prenant appui, par l'extrémité inactive 21 de celle-ci, dans le sillon 70 et en prenant soin de ne pas effacer le marquage du fond du sillon 72.

Après l'usinage de la face vestibulo-occlusale 73 il est préférable de la marquer entièrement pour la préserver lors des étapes suivantes.

En référence maintenant aux figures 9c et 10c, on peut voir que l'étape suivante consiste à mettre la dent 7 de dépouille en usinant toutes les faces de la dent selon l'axe d'insertion au moyen d'une fraise 2', ou 2, en prenant appui au niveau cervical 74 par l'extrémité inactive 21', ou 21, en respectant la papille et les dents adjacentes.

Le choix de la fraise dépend de l'espace inter dentaire, si les dents ne se touchent pas il est préférable d'utiliser une fraise 2.

Les étapes suivantes consistent en la réalisation du congé cervical qui est l'opération la plus délicate de la préparation de la dent 7.

En référence aux figures 9d et 10d, on peut voir que dans un premier temps on réalise, en deçà de la limite souhaitée, un sillon pré-cervical périphérique 75 au moyen d'une fraise 1 dont l'extrémité sphérique active 11 est d'un diamètre suffisamment petit pour passer dans l'espace inter dentaire sans léser les dents adjacentes.

Comme on peut le voir sur les figures 9e et 10e, le sillon 75 constitue le lit de la partie 21 de la fraise 2 qui remet tout de dépouille.

On notera que cette opération peut également être réalisée au moyen de la fraise 8 ou l'une de ses variantes.

Il convient ensuite, comme cela est représenté sur les figures 9f et 10f, de reprendre une fraise 1 de diamètre adéquat, laquelle peut être bloquée par son fût 10 et sa calotte inactive 13, et balancée selon un axe proche de celui d'insertion pour conserver sur la totalité de la périphérie un sillon d'épaisseur constante.

Puis, en référence aux figures 9g et 10g, on utilise une fraise 2 pour mettre la dent 7 de dépouille. Les fraises 1 et 2 ou 8 seront utilisées alternativement jusqu'à obtenir un congé 76 d'environ 10/10.

On notera que pour la réalisation du congé on utilise de préférence une fraise 8, laquelle peut permettre d'éviter l'utilisation en alternance d'une fraise 2 et d'une fraise 1, du fait que, contrairement à la fraise 2, la partie distale hémisphérique 82 de la 8 est en partie active ce qui autorise un usinage sensiblement équivalent à celui de la fraise 1.

La finition du congé 76 est représentée sur la figure 9h, elle est obtenue par les utilisations successives des fraises 4, 5 et 6.

La fraise 4 est utilisée pour régulariser la surface du congé 76 et le conduire à sa situation définitive. La zone périphérique inactive 44 permet à la fraise 4 de se placer au niveau définitif du sulcus en repoussant gentiment la papille sans l'agresser.

Par contre, la fraise 4 peut arrondir l'angle cervico-axial, aussi, la fraise 5 permet de remédier à cet inconvénient, en prenant toutefois la précaution de la maintenir constamment en contact sur la paroi axiale pour éviter de créer une contre dépouille à ce niveau et de détruire la papille.

La régularisation de la surface du congé peut également être réalisée au moyen de la fraise 6, dont la zone périphérique inactive 64 d'une part de limiter un éventuel enfoncement, d'autre part d'éviter la création d'une contre dépouille, et d'autre part encore de ne pas agresser la papille gingivale.

L'étape suivante consiste à traiter la face linguale 77 qui est concave, en la réduisant ainsi que le bord incisif au moyen d'une fraise 3, comme cela est représenté sur la figure 10i, après y avoir réalisé, de la même manière que pour la face vestibulo-occlusale 73, deux sillons mésio-distaux 78 et 79 au moyen d'une fraise 1.

Enfin, après la réalisation du congé, la dent 7 peut être polie de façon à supprimer les différents marquages utilisés, en veillant à ne pas toucher au congé qui doit rester bien net à environ 90°, en regard de la paille gingivale.

Les fraises 1, 3, 4, 5 et 8 selon l'invention, utilisées comme décrit précédemment, permettent de préparer une dent sans risquer d'endommager celle-ci.

Elles ne peuvent pas creuser axialement puisque leur extrémité apicale est inactive et disposée dans le même plan convexe que la surface active.

La fraise 6 quant à elle, permet, en complément des fraises 4 et 5, de réaliser la finition du congé cervical, la forme arrondie de son extrémité distale 62 facilitant le contrôle de son déplacement.

Les fraises objet de la présente invention permettent d'usiner la surface d'une dent par leur extrémité distale tout en interdisant ou en limitant la pénétration axiale, ce qui autorise un travail d'un grand contrôle, et donc d'une totale sûreté.

## Revendications

1. Ensemble de fraises destiné à la préparation d'une dent en vue de la pose d'une couronne prothétique, où lesdites fraises (1; 3; 4, 5 ; 6 ; 8) comportent une partie active et au moins une partie inactive, **caractérisé en ce que** chacune des fraises comporte ladite partie active en extrémité distale (12; 32; 42; 52 ; 62 ; 82), ayant une forme de portion de sphère, et qui présente une partie inactive (13; 33; 43; 53 ; 64 ; 83) et une partie active (11 ; 31 ; 45 ; 63), dont l'une desdites parties active ou inactive consiste en une calotte sphérique en position apicale présentant un petit cercle (14, 84) de rayon très inférieur au rayon de courbure de ladite calotte.

2. Ensemble de fraises selon la revendication 1, **caractérisé en ce que** la calotte sphérique apicale est inactive.

3. Ensemble de fraises selon la revendication 2 **caractérisé en ce que** l'une (1; 3) desdites fraises comporte une tête (11; 31) en forme de sphère ou analogue.

4. Ensemble de fraises selon la revendication 2 ou la revendication 3, **caractérisé en ce que** l'une (5) des fraises est un cylindre (50) dont la surface cylindrique (51) est inactive, et son extrémité distale (52) est en forme de calotte sphérique de rayon de courbure supérieur à celui dudit cylindre (50).

5. Ensemble de fraises selon l'une quelconque des revendications 2 à 4, **caractérisé en ce que** l'une (4) desdites fraises est en forme de cylindre, sa surface cylindrique étant inactive, tandis que son extrémité distale (42), qui est en forme de calotte sphérique de rayon de courbure supérieur à celui dudit cylindre (40), présente, outre une calotte apicale inactive (43), une zone périphérique inactive (44) en sorte que la partie active (45) de ladite extrémité distale (42) s'étende sur un anneau sphérique.

6. Ensemble de fraises selon l'une quelconque des revendications 2 à 5, **caractérisé en ce que** l'une (8) des fraises est de forme cylindrique ou cylindro-conique, dont la surface cylindrique (81) ou cylindro-conique est active, tandis que l'extrémité distale (82) est hémisphérique.

7. Ensemble de fraises selon la revendication 1, **caractérisé en ce que** la calotte sphérique apicale est active.

8. Ensemble de fraises selon la revendication 7, **caractérisé en ce que** l'une (6) desdites fraises est en forme de cylindre (60), sa surface cylindrique (61) étant inactive, tandis que son extrémité distale (62), qui est en forme de calotte sphérique de rayon de courbure supérieur à celui dudit cylindre (60), présente une calotte sphérique apicale (63) active bordée par un anneau sphérique (64) inactif.

9. Ensemble de fraises selon la revendication 7 ou la revendication 8, **caractérisé en ce que** l'une desdites fraises est en forme de cylindre, sa surface cylindrique étant inactive, tandis que son extrémité distale, qui est en forme de calotte sphérique de rayon de courbure supérieur à celui dudit cylindre, présente une calotte sphérique apicale active bordée par un bord chanfreiné inactif.

## Claims

1. A set of drills for the preparation of a tooth for the purpose of laying a prosthetic crown, wherein said drills (1 ; 3 ; 4 ; 5 ; 6 ; 8) include an active part and at least an inactive part, **characterised in that** each of the drills includes said active part at the distal end (12 ; 32 ; 42 ; 52 ; 62 ; 82), adopting the form of a sphere portion, and having an inactive part (13 ; 33 ; 43 ; 53 ; 64 ; 83) and an active part (11 ; 31 ; 45 ; 63), whereby one of said active or inactive parts consists of a spherical cap in apical position having a small circle (14, 84) of a radius quite smaller than the curvature radius of said cap.

2. A set of drills according to claim 1, **characterised in that** the apical spherical cap is inactive.

3. A set of drills according to claim 2, **characterised in that** one (1 ; 3) of said drills includes a head (11 ; 31) in the form of a sphere or similar.

4. A set of drills according to claim 2 or claim 3, **characterised in that** one (5) of the drills is a cylinder (50) whose cylindrical surface (51) is inactive, and its distal end (52) is in the form of a spherical cap of a curvature radius larger than that of said cylinder (50).

5. A set of drills according to any of claims 2 through 4, **characterised in that** one (4) of said drills is in the form of a cylinder, its cylindrical surface being inactive, whereas its distal end (42), which is in the form of a spherical cap of a curvature radius larger than that of said cylinder (40), has, besides an inactive apical cap (43), an inactive peripheral zone (44) so that the active part (45) of said distal end (42) extends on a spherical ring.

6. A set of drills according to any of claims 2 through 5, **characterised in that** one (8) of the drills has a cylindrical or cylindrical-conical shape, the cylindrical or cylindrical-conical surface (81) of which is active, whereas the distal end (92) is hemispherical.

7. A set of drills according to claim 1, **characterised in that** the apical spherical cap is active.

8. A set of drills according to claim 7, **characterised in that** one (6) of said drills is in the form of a cylinder (60), its cylindrical surface (61) being inactive, whereas its distal end (62), which is in the form of a spherical cap of a curvature radius larger than that of said cylinder (60), has an active apical spherical cap (63) lined by an inactive spherical ring (64).

9. A set of drills according to claim 7 or claim 8, **characterised in that** one of said drills is in the form of a cylinder, its cylindrical surface being inactive, whereas its distal end, which is in the form of a spherical cap of a curvature radius larger than that of said cylinder, has an active apical spherical cap lined by an inactive beveled edge.

## Patentansprüche

1. Fräsanordnung für die Vorbereitung eines Zahnes zur Befestigung einer Schutzkrone, wo die besagten Fräser (1 ; 3 ; 4, 5 ; 6 ; 8) einen aktiven Teil und wenigstens einen inaktiven Teil umfassen, **dadurch gekennzeichnet, daß** jeder der Fräser den besagten aktiven Teil am distalen Ende (12 ; 32 ; 42 ; 52 ; 62 ; 82) umfaßt, das die Form eines Kugelabschnitts hat, und das einen inaktiven Teil (13 ; 33 ; 43 ; 53 ; 64 ; 83) und einen aktiven Teil (11 ; 31 ; 45 ; 63) aufweist, wobei einer der besagten aktiven oder inaktiven Teile aus einer Kugelhaube in apikaler Position besteht, die einen kleinen Kreis (14, 84) mit einem Radius aufweist, der viel kleiner ist als der Krümmungsradius der besagten Kugelhaube.

2. Fräsanordnung nach Anspruch 1, **dadurch gekennzeichnet, daß** die apikale Kugelhaube inaktiv ist.

3. Fräsanordnung nach Anspruch 2, **dadurch gekennzeichnet, daß** einer (1 ; 3) der besagten Fräser einen Kopf (11 ; 31) in Form von einer Sphäre oder dergleichen umfaßt.

4. Fräsanordnung nach Anspruch 2 oder Anspruch 3, **dadurch gekennzeichnet, daß** einer (5) der Fräser ein Zylinder (50) ist, dessen zylindrische Oberfläche (51) inaktiv ist, und sein entferntes Ende (52) die Form einer Kugelhaube hat mit einem Krümmungsradius, der größer ist als jener des Zylinders (50).

5. Fräsanordnung nach irgendeinem der Ansprüche 2 bis 4, **dadurch gekennzeichnet, daß** einer (4) der besagten Fräser in Form eines Zylinders ist, wobei seine zylindrische Oberfläche inaktiv sei, während sein distales Ende (42) in Form einer Kugelhaube mit einem Krümmungsradius, der größer ist als jener des Zylinders (40), außer einer inaktiven apikalen Kugelhaube (43) einen inaktiven Umkreisbereich (44) aufweist, derart, daß der aktive Teil (45) des besagten distalen Endes (42) sich auf einem sphärischen Ring erstreckt.

6. Fräsanordnung nach irgendeinem der Ansprüche 2 bis 5, **dadurch gekennzeichnet, daß** einer (8) der Fräser eine zylindrische oder zylinder-konische Form hat, wobei die zylindrische (81) oder zylinder-konische Oberfläche aktiv ist, während das distale Ende (82) hemisphärisch ist.

7. Fräsanordnung nach Anspruch 1, **dadurch gekennzeichnet, daß** die apikale Kugelhaube aktiv ist.

8. Fräsanordnung nach Anspruch 7, **dadurch gekennzeichnet, daß** einer (6) der besagten Fräser in Form eines Zylinders (60) ist, wobei seine zylindrische Oberfläche (61) inaktiv sei, während sein distales Ende (62) in Form einer Kugelhaube mit einem Krümmungsradius, der größer ist als jener des Zylinders (60), eine aktive apikale Kugelhaube (63) aufweist, die durch einen inaktiven sphärischen Ring (64) begrenzt ist.

9. Fräsanordnung nach Anspruch 7 oder Anspruch 8, **dadurch gekennzeichnet, daß** einer der besagten Fräser in Form eines Zylinders ist, wobei seine zylindrische Oberfläche inaktiv sei, während sein distales Ende in Form einer Kugelhaube mit einem Krümmungsradius, der größer ist als jener des Zylinders, eine aktive apikale Kugelhaube aufweist, die durch einen inaktiven abgeschrägten Rand begrenzt ist.
